# EUROPÄISCHE PATENTSCHRIFT

(11) **EP 3 811 028 B1**
(45) Veröffentlichungstag und Bekanntmachung des Hinweises auf die Patenterteilung: **21.10.2026**
(21) Anmeldenummer: 19722575.8
(22) Anmeldetag: 03.05.2019
(51) Int. Cl.: G01C 21/12, G01C 21/30

(54) **VERFAHREN ZUM BEREITSTELLEN EINER ORTUNGSINFORMATION ZUM ORTEN EINES FAHRZEUGS DURCH EINE FAHRZEUGEXTERNE ORTUNGSEINRICHTUNG, ORTUNGSEINRICHTUNG SOWIE VERFAHREN UND VORRICHTUNG ZUM ORTEN EINES FAHRZEUGS MITTELS EINER ORTUNGSINFORMATION**
METHOD FOR PROVIDING LOCATION INFORMATION FOR LOCATING A VEHICLE BY A LOCATING DEVICE ARRANGED EXTERNALLY OF THE VEHICLE, LOCATING DEVICE, AND METHOD AND DEVICE FOR LOCATING A VEHICLE BY MEANS OF LOCATION INFORMATION
PROCÉDÉ POUR FOURNIR UNE INFORMATION DE LOCALISATION PERMETTANT DE LOCALISER UN VÉHICULE AU MOYEN D'UN DISPOSITIF DE LOCALISATION À L'EXTÉRIEUR DU VÉHICULE, DISPOSITIF DE LOCALISATION AINSI QUE PROCÉDÉ ET DISPOSITIF POUR LOCALISER UN VÉHICULE AU MOYEN D'UNE INFORMATION DE LOCALISATION

(30) Priorität: 21.06.2018 DE 102018210077
(43) Veröffentlichungstag der Anmeldung: 28.04.2021
(73) Patentinhaber: Robert Bosch GmbH, 70442 Stuttgart (DE)
(72) Erfinder: SKUPIN, Christian, 30823 Garbsen (DE); WERDER, Stefan, 30655 Hannover (DE); ENGEL, Peter, 31139 Hildesheim (DE)
(86) Internationale Anmeldenummer: PCT/EP2019/061335
(87) Internationale Veröffentlichungsnummer: WO 2019/242924

(56) Entgegenhaltungen:
- US-A1- 2016 069 690
- US-A1- 2016 146 616

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Eine GNSS (z.B. GPS)-basierte Ortung eines Fahrzeugs kann über eine lokal im Fahrzeug befindliche Ortungskomponente erfolgen. Eine GPS-basierte Ortung für Navigationsanwendungen auf mobilen Endgeräten erfolgt üblicherweise ebenfalls auf dem betreffenden Endgerät. Dabei werden beispielsweise Karten und Routen von einem Server heruntergeladen, wobei die Ortung anschließend lokal auf dem Endgerät erfolgt. Die Ortung kann etwa auch bei deaktivierter Mobilfunkverbindung durchgeführt werden.

Bei der sogenannten Offboard-Ortung werden an ein Backend übermittelte Fahrzeugsensordaten verarbeitet, um eine Fremdortung des Fahrzeugs in einer Karte vorzunehmen. Dieses Verfahren kommt beispielsweise bei Versicherungen zur Anwendung und wird offline ausgeführt, d. h., die Fahrzeugsensordaten werden nicht in Echtzeit, sondern beispielsweise innerhalb von 24 Stunden nach Beendigung der zugehörigen Fahrt verarbeitet.

Die US 2016/069690 A1) offenbart ein Verfahren zum Verbessern der Navigationslösung eines tragbaren Geräts. Die US 2016/069690 A1 offenbart ein Verfahren, bei dem wenig präzise Fahrzeugsensoren zur Trägheitsnavigation genutzt werden, wenn kein GPS-Signal zur Verfügung steht. Es kann auf Kartendaten einer Karte zugegriffen werden, die auf einem externen Server gespeichert ist.

### Offenbarung der Erfindung

Vor diesem Hintergrund werden mit dem hier vorgestellten Ansatz ein Verfahren zum Bereitstellen einer Ortungsinformation zum Orten eines Fahrzeugs durch eine fahrzeugexterne Ortungseinrichtung, eine Ortungseinrichtung, die dieses Verfahren verwendet, ein Verfahren zum Orten eines Fahrzeugs mittels einer Ortungsinformation, eine Vorrichtung , die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der hier vorgestellte Ansatz beruht auf der Erkenntnis, dass ein Fahrzeug unter Verwendung entsprechender Sensordaten des Fahrzeugs in Echtzeit mittels einer fahrzeugexternen Ortungseinrichtung in einer digitalen Karte verortet werden kann. In einer geeigneten Partitionierung können die Vorteile einer backend- und clientseitigen Ortung zu einer hybriden Ortung vereint werden. Eine solche backendgestützte Echtzeitortung für cloudbasierte Fahrzeugfunktionen, etwa für Funktionen eines Fahrerinformations- oder Assistenzsystem, ermöglicht es, Komponenten- und/oder Funktionsanteile so weit wie möglich auf das Backend, etwa einen zentralen Server, auszulagern. Dadurch, dass auf dem Backend hinterlegte Karten für die Ortung verwendet werden, kann sichergestellt werden, dass stets möglichst aktuelle Kartendaten für die Ortung verwendet werden. Ferner kann so die im Fahrzeug erforderliche Rechenleistung niedrig gehalten werden. Auch können die Anforderungen an die Fahrzeugausstattung bezüglich cloudbasierter Funktionen verringert werden, da die Verfügbarkeit einer Karte im Fahrzeug als Anforderung entfällt. Ein weiterer Vorteil besteht darin, dass auf dem Backend vorhandene Funktionsanteile besonders leicht gepflegt und gewartet werden können.

Durch eine client-, d. h. fahrzeugseitige Ortungskomponente kann dann beispielsweise die vom Backend berechnete Fahrzeugposition unter Verwendung einer bordeigenen Sensorik und eines kompakten Datensatzes in Form von zumindest einer vom Backend berechneten Stützstellenposition getrackt, d.h. verfolgt werden, was auch als Position Tracking bezeichnet werden kann. Somit können Latenzen bei der Ortung minimiert werden.

Neben der Ermöglichung einer Echtzeitortung bietet der hier vorgestellte Ansatz den Vorteil einer hohen Ortungsgenauigkeit, einer geringen Anfälligkeit gegenüber Mobilfunkverbindungsabbrüchen und einer geringen erforderlichen Kommunikationsbandbreite.

Es wird ein Verfahren nach Anspruch 1 bereitgestellt.

Unter einer fahrzeugexternen Ortungseinrichtung kann eine außerhalb des Fahrzeugs befindliche, beispielsweise zentrale Datenverarbeitungseinrichtung verstanden werden. Bei der Schnittstelle kann es sich etwa um eine Kommunikationsschnittstelle zur drahtlosen Datenübertragung zwischen dem Fahrzeug und der Ortungseinrichtung handeln. Die Ortungseinrichtung kann beispielsweise ausgebildet sein, um gleichzeitig mit mehreren Fahrzeugen zu Ortungszwecken zu kommunizieren. Die Fahrzeugsensorik kann einen oder mehrere Sensoren umfassen. Unter einem Sensor kann beispielsweise ein Umfeldsensor zum Erfassen eines Umfelds des Fahrzeugs, etwa in Form einer Kamera, eines Ultraschall-, Radar- oder Lidarsensors, ein Beschleunigungs-, Winkel- oder Drucksensor, ein Ortungssensor zur Realisierung einer Ortungsfunktion, etwa ein GPS-Sensor, oder ein sonstiger im Fahrzeug verbauter Sensor zum Erfassen von Parametern bezüglich eines Fahrzustands des Fahrzeugs verstanden werden. Dementsprechend kann die Fahrzeugsensorinformation beispielsweise eine aktuelle Geschwindigkeit oder Fahrspur des Fahrzeugs, einen Straßenverlauf, ein Verkehrszeichen, andere Verkehrsteilnehmer oder markante Punkte im Umfeld des Fahrzeugs wie beispielsweise Gebäude oder Bäume oder Positionsdaten repräsentieren. Es versteht sich daraus, dass die beispielhaft aufgeführten vorgenannten Sensoren nicht auf eine reine Sensorfunktion beschränkt sein müssen, sondern auch eine nachgeschaltete Auswertung zur Auswertung der erfassten Sensordaten umfassen können. Im Beispiel der Kamera als ein möglicher Sensor umfasst diese vorzugsweise über eine nachgeschaltete oder inkludierte Bildsignalverarbeitung, welche eine Identifizierung der beispielhaft genannten Objekte bzw. Zustände, etwas Fahrspur des Fahrzeugs, Straßenverlauf, Verkehrszeichen, andere Verkehrsteilnehmer oder markante Punkte, wie beispielsweise Gebäude oder Bäume, beispielsweise durch Vergleich der aufgenommenen Bilder als Sensordaten mit gespeicherten Bildmustern, ermöglicht. Unter einer digitalen Karte kann beispielsweise eine in der Ortungseinrichtung hinterlegte Karte zur Orts- oder Routenbestimmung verstanden werden. Diese kann vorzugsweise Informationen umfassen, welche ein Verkehrswege-, insbesondere Straßennetz repräsentieren. Bei der Karte kann es sich auch um eine dynamische Karte handeln. Unter einer Stützstelle wird eine mittels der Ortungseinrichtung ermittelte und mit einer möglichen Route des Fahrzeugs verknüpfte aktuelle Position oder voraussichtliche zukünftige Position des Fahrzeugs oder eine darauf basierende Information verstanden. Die Stützstelle kann vom Fahrzeug beispielsweise zum Position Tracking, also zum Verfolgen einer insbesondere über Zeit veränderlichen Position, mittels Extrapolation verwendet werden.

Gemäß dem Verfahren nach Anspruch 1 werden im Schritt des Verortens zumindest ein voraussichtlicher Pfad des Fahrzeugs und eine aktuelle Position des Fahrzeugs ermittelt. Dabei kann die Stützstelle unter Verwendung des voraussichtlichen Pfades und der aktuellen Position erzeugt werden. Unter einer aktuellen Position können aktuelle Koordinaten des Fahrzeugs in der digitalen Karte verstanden werden. Die aktuelle Position kann einen entsprechenden Zeitstempel aufweisen. Unter einem voraussichtlichen Pfad kann ein Pfad verstanden werden, dem das Fahrzeug mit sehr hoher Wahrscheinlichkeit folgen wird. Der voraussichtliche Pfad kann deshalb auch als MPP (Most Probable Path) bezeichnet werden. Die Stützstelle wird durch Projektion der aktuellen Position mit dem dazugehörigen Zeitstempel auf den voraussichtlichen Pfad erzeugt. Dadurch kann die Stützstelle besonders schnell und effizient erzeugt werden.

Im Schritt des Verortens kann ein eindimensionaler Pfad als der voraussichtliche Pfad ermittelt werden. Dadurch kann eine zwischen der Ortungseinrichtung und dem Fahrzeug zu übertragende Datenmenge auf ein Minimum reduziert werden. Weiterhin kann somit die Robustheit des Ortungsverfahrens gegen Verbindungsabbrüche oder -störungen erhöht werden.

Gemäß dem Verfahren nach Anspruch 1 wird im Schritt des Verortens der voraussichtliche Pfad mit der Stützstelle und zumindest einer für das Fahrzeug relevanten Zusatzinformation verknüpft, um einen angereicherten Pfad als die Ortungsinformation zu erzeugen. Unter einer Zusatzinformation kann beispielsweise ein für bestimmte Funktionen des Fahrzeugs relevantes Kartenattribut der digitalen Karte verstanden werden. Das Kartenattribut kann mit dem voraussichtlichen Pfad beispielsweise unter Verwendung eines Streckenmaßarguments verknüpft werden. Analog dazu kann auch die Stützstelle, etwa in Form der auf den voraussichtlichen Pfad projizierten aktuellen Position des Fahrzeugs, als Attribut mit dem angereicherten Pfad verknüpft sein. Dadurch können dem Fahrzeug möglichst viele ortungsrelevante Daten bei sehr geringem Bandbreitenverbrauch bereitgestellt werden.

Im Schritt des Verortens kann der voraussichtliche Pfad mit einer zumindest eine Abzweigungsstelle des Pfades repräsentierenden Zusatzinformation verknüpft werden. Unter einer Abzweigungsstelle kann beispielsweise ein Punkt des voraussichtlichen Pfades verstanden werden, an dem sich der Pfad in zumindest einen weiteren Pfad verzweigt. Somit kann es sich bei der Abzweigungsstelle um einen Punkt des voraussichtlichen Pfades handeln, an dem das Fahrzeug die Möglichkeit hat, abzubiegen. Dementsprechend kann die Zusatzinformation beispielsweise einen Abbiegewinkel oder eine Kurvenkrümmung an der Abzweigungsstelle repräsentieren. Dadurch können Genauigkeit und Zuverlässigkeit der fahrzeugseitigen Ortung erhöht werden.

Gemäß einer weiteren Ausführungsform kann die Fahrzeugsensorinformation Daten über einen aktuell von dem Fahrzeug befahrenen Fahrstreifen repräsentieren. Diese Ausführungsform ermöglicht eine spurgenaue Ortung des Fahrzeugs. Dazu können beispielsweise Daten einer Kamera oder einer Positionserfassungseinrichtung des Fahrzeugs verwendet werden.

Um Ungenauigkeiten oder Fehlerakkumulationen zu reduzieren, können die Schritte des Empfangens, Verortens und Ausgebens gemäß einer weiteren Ausführungsform in definierten Intervallen wiederholt werden.

Zwischen dem Schritt des Empfangens der Fahrzeugsensorinformation und dem Schritt des Ausgebens der unter Verwendung der Fahrzeugsensorinformation bestimmten Ortungsinformation kann eine Zeitspanne von weniger als einer Minute liegen. Auf diese Weise kann die Ortungsinformation für eine Navigation des Fahrzeugs in Echtzeit verwendet werden.

Das Verfahren nach Anspruch 1 umfasst auch folgende Schritte:
Empfangen der Ortungsinformation von der Schnittstelle; und
Bestimmen einer Position des Fahrzeugs durch Verarbeiten der Ortungsinformation unter Verwendung eines von einer Fahrzeugsensorik des Fahrzeugs bereitgestellten Sensorsignals, um das Fahrzeug zu orten.

Unter einem Sensorsignal kann beispielsweise analog zu den durch die Fahrzeugsensorinformation repräsentierten Daten ein Signal eines Umfeld-, Beschleunigungs-, Druck-, Winkel- oder Ortungssensors des Fahrzeugs verstanden werden. Das Sensorsignal und die Fahrzeugsensorinformation können beispielsweise identische Daten, unterschiedliche Daten und auch von unterschiedlichen Sensoren des Fahrzeugs bereitgestellte Daten repräsentieren.

Gemäß dem Verfahren nach Anspruch 1 wird im Schritt des Bestimmens die Position unter Verwendung einer durch das Sensorsignal repräsentierten aktuellen Geschwindigkeit des Fahrzeugs und eines durch die Ortungsinformation repräsentierten Zeitstempels der Stützstelle extrapoliert. Dadurch wird eine besonders schnelle Ortung des Fahrzeugs, insbesondere eine Ortung des Fahrzeugs in Echtzeit, ermöglicht.

Das Verfahren kann einen Schritt des Erfassens der Daten unter Verwendung der Fahrzeugsensorik und einen Schritt des Aussendens der die Daten repräsentierenden Fahrzeugsensorinformation an die Schnittstelle zwischen der Ortungseinrichtung und dem Fahrzeug umfassen. Dabei können die Schritte des Erfassens, des Aussendens, des Empfangens und des Bestimmens während einer Fahrt des Fahrzeugs mehrfach wiederholt ausgeführt werden. Auf diese Weise können direkt während der Fahrt des Fahrzeugs erfasste Daten übermittelt und dadurch eine sehr aktuelle Ortungsinformation bestimmt und an das Fahrzeug zurückübertragen werden.

Diese Verfahren können beispielsweise in Software oder Hardware oder in einer Mischform aus Software und Hardware, beispielsweise in einem Steuergerät, implementiert sein.

Der hier vorgestellte Ansatz schafft zudem eine fahrzeugexterne Ortungseinrichtung mit Einheiten, die ausgebildet sind, um das Verfahren zum Bereitstellen einer Ortungsinformation gemäß einer der vorstehenden Ausführungsformen auszuführen und/oder anzusteuern.

Des Weiteren schafft der hier vorgestellte Ansatz eine Vorrichtung, die ausgebildet ist, um die Schritte einer Variante eines hier vorgestellten Verfahrens zum Orten eines Fahrzeugs in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung des Fahrzeugs. Hierzu kann die Vorrichtung beispielsweise auf Sensorsignale wie Beschleunigungs-, Druck-, Lenkwinkel- oder Umfeldsensorsignale zugreifen. Die Ansteuerung kann über Aktoren wie Brems- oder Lenkaktoren oder ein Motorsteuergerät des Fahrzeugs erfolgen.

Ausführungsbeispiele der Erfindung sind in den Zeichnungen dargestellt und in der nachfolgenden Beschreibung näher erläutert. Es zeigt:
- Fig. 1: eine schematische Darstellung eines Systems zur Echtzeitortung gemäß einem Ausführungsbeispiel;
- Fig. 2: ein Ablaufdiagramm eines Verfahrens zum Bereitstellen einer Ortungsinformation mittels einer Ortungseinrichtung gemäß einem Ausführungsbeispiel; und
- Fig. 3: ein Ablaufdiagramm eines Verfahrens zum Orten eines Fahrzeugs mittels einer Vorrichtung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

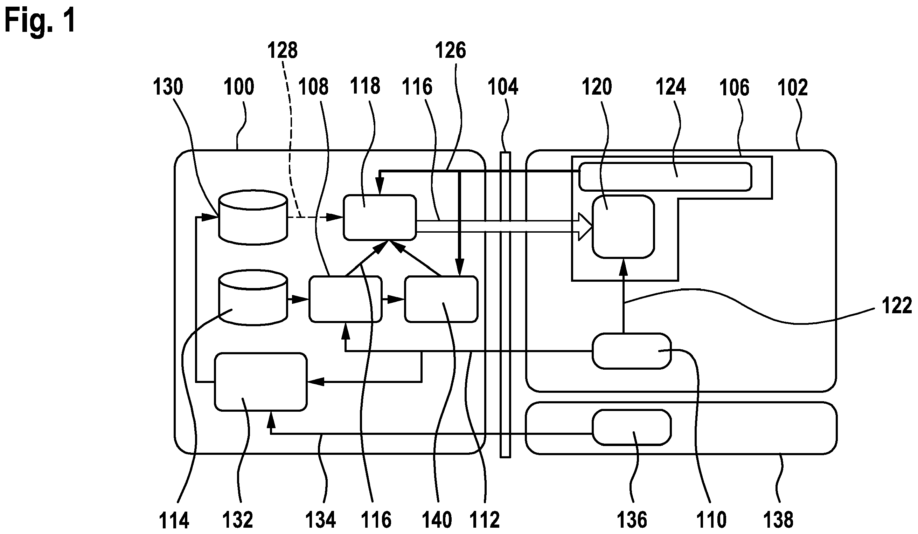

Fig. 1 zeigt eine schematische Darstellung eines Systems zur Echtzeitortung mit einer Ortungseinrichtung 100 und zumindest einem Fahrzeug 102 gemäß einem Ausführungsbeispiel. Gezeigt ist ein Ausführungsbeispiel zur Partitionierung von Ortungskomponenten zwischen einem Backend in Form der Ortungseinrichtung 100 und einem Client in Form des Fahrzeugs 102. Die Ortungseinrichtung 100 ist außerhalb des Fahrzeugs 102 angeordnet. Beispielsweise handelt es sich bei der Ortungseinrichtung 100 um einen zentralen Server. Über eine Schnittstelle 104 ist die Ortungseinrichtung 100 mit einer im Fahrzeug 102 integrierten Vorrichtung 106 zum fahrzeugseitigen Orten des Fahrzeugs 102 verbunden. Die Schnittstelle 104 umfasst beispielsweise Antennen zur Signalübertragung. Die Vorrichtung 106 ist beispielsweise als Einplatinencomputer realisiert.

Die Ortungseinrichtung 100 umfasst eine Verortungseinheit 108, die ausgebildet ist, um von der Schnittstelle 104 eine auf Daten einer Sensoreinrichtung 110 des Fahrzeugs 102 bereitgestellte Fahrzeugsensorinformation 112 zu empfangen. Die Fahrzeugsensorik 110 umfasst zumindest einen Sensor, beispielsweise zur Erfassung eines Umfelds, einer Bewegung oder einer Position des Fahrzeugs 102. Die Verortungseinheit 108 ist ausgebildet, um die Fahrzeugsensorinformation 112 zur Verortung des Fahrzeugs 102 in zumindest einer digitalen Karte, hier einer Basis- bzw. Navigationskarte 114, in geeigneter Weise zu verarbeiten. Dabei generiert die Verortungseinheit 108 eine Ortungsinformation 116, die zumindest eine Stützstelle umfasst. Die Stützstelle ist geeignet, um eine fahrzeugseitige Ortung des Fahrzeugs mittels der Vorrichtung 106 durchzuführen. Eine Bereitstellungseinheit 118 der Ortungseinrichtung 100 ist ausgebildet, um die Ortungsinformation 116 an die Schnittstelle 102 auszugeben, um die Stützstelle der Vorrichtung 106 zur weiteren Positionsbestimmung bereitzustellen.

Die Ortungsinformation 116 wird von einer Bestimmungseinheit 120 der Vorrichtung 106 über die Schnittstelle 104 empfangen. Die Bestimmungseinheit 120 ist ausgebildet, um die Position des Fahrzeugs 102 unter Verwendung der Ortungsinformation 116 und eines von der Fahrzeugsensorik 110 bereitgestellten Sensorsignals 122 zu bestimmen. Das Sensorsignal 122 kann eine ähnliche, die gleiche oder eine andersartige Information wie die Fahrzeugsensorinformation 112 repräsentieren. Somit kann zur Bestimmung des Sensorsignals 122 und der Fahrzeugsensorinformation 112 ein und derselbe Sensor oder unterschiedliche Sensoren der Fahrzeugsensorik 110 verwendet werden.

Optional umfasst die Vorrichtung 106 eine Zusatzeinheit 124, die ausgebildet ist, um der Bereitstellungseinheit 118 über die Schnittstelle 104 optionale Daten 126, beispielsweise Konfigurationsdaten zur Verfügung zu stellen. Diese können z.B. genutzt werden, um zu Bestimmen mit welcher Rate Positionsstützstellen in der Ortungsinformation 116 von der Ortungseinrichtung 100 aktualisiert werden und in welchem Umfang Ortungsinformationen mit Zusatzinformationen, wie z.B. Karten-basierte Daten verknüpft werden sollen, z.B. zum Zwecke der Bereitstellung von Zusatzinformation für das fahrzeugseitige Positionstracking und/oder der Bereitstellung von Zusatzinformationen für Fahrzeugfunktionen.

Gemäß einem Ausführungsbeispiel empfängt die Bereitstellungseinheit 118 zur Erzeugung und/oder Anreicherung der Ortungsinformation 116 eine oder mehrere Karten-basierte Daten 128, die durch eine Dynamikkarte 130 bereitgestellt wird. Gemäß einem Ausführungsbeispiel werden die Karten-basierten Daten 128 zur Anreicherung eines Pfads verwendet. Die Dynamikkarte 130 resultiert beispielsweise aus der Aggregation verschiedener Straßenattribute in einer Aggregationseinheit 132 auf der Basis der Fahrzeugsensorinformation 112 und weiterer Fahrzeugsensorinformationen 134, die von Sensoren 136 weiterer Fahrzeuge 138 bereitgestellt und über die Schnittstelle 104 von der Aggregationseinheit 132 empfangen werden.

Die Verarbeitung der Fahrzeugsensorinformation 112 zur Ortung des Fahrzeugs 102 erfolgt beispielsweise in folgenden Verarbeitungsschritten. Die Nummern der Verarbeitungsschritte sind in Fig. 1 den entsprechenden Komponenten der Ortungseinrichtung 100 bzw. der Vorrichtung 106 nach geeigneter Partitionierung zugeordnet.

In einem ersten Verarbeitungsschritt erfolgt der Upload der Fahrzeugsensordaten umfassenden Fahrzeugsensorinformation 112 an die Ortungseinrichtung 100, nachfolgend auch Backend genannt.

In einem zweiten Verarbeitungsschritt erfolgt die Ortung des Fahrzeugs 102 durch Map-Matching in der Verortungseinheit 108 anhand der auf dem Backend befindlichen Karte 114.

In einem dritten Verarbeitungsschritt erfolgt in einer mit der Verortungseinheit 108 gekoppelten Pfadberechnungseinheit 140 die Berechnung zumindest eines voraussichtlichen Pfades, auch Most Probable Path oder kurz MPP genannt. Die Berechnung des MPP-Pfades erfolgt somit auf dem Backend.

In einem vierten Verarbeitungsschritt erfolgt die Anreicherung des MPP-Pfades mit für bestimmte Funktionen des Fahrzeugs 102 relevanten Karten-basierten Daten in der Bereitstellungseinheit 118, angedeutet durch einen gestrichelten Pfeil. Für eine kompakte Encodierung wird der MPP-Pfad als eindimensionaler Pfad betrachtet. Die Kartenattribute werden von der Bereitstellungseinheit 118 mit dem eindimensionalen Pfad unter Nutzung eines Streckenmaßarguments verknüpft.

In einem fünften Verarbeitungsschritt erfolgt die Erzeugung zumindest einer Positionsstützstelle, vorangehend auch kurz Stützstelle genannt, für ein clientseitiges Position Tracking. Die Erzeugung der Positionsstützstelle kann auch als vierter Verarbeitungsschritt erfolgen. Dabei wird eine aktuelle Fahrzeugposition mit Zeitstempel aus der Backend-Ortung auf den MPP-Pfad, d. h. auf einen oder mehrere eindimensionale Pfade, projiziert. Die projizierte Fahrzeugposition wird als Attribut im angereicherten MPP-Pfad verknüpft.

In einem sechsten Verarbeitungsschritt erfolgt die Übermittlung des angereicherten MPP-Pfades an den Client, hier das Fahrzeug 102 oder die Vorrichtung 106.

Die nachfolgenden Verarbeitungsschritte finden im Client, also in dem Fahrzeug 102 oder der Vorrichtung 106 statt.

In einem siebten Verarbeitungsschritt erfolgen die Extrahierung der Positionsstützstelle aus dem angereicherten MPP-Pfad und die Extrapolation einer eindimensionalen Position anhand einer aktuellen Fahrzeuggeschwindigkeit oder weiterer Daten der Fahrzeugsensorik 110 und anhand des Zeitstempels der Positionsstützstelle.

In einem achten Verarbeitungsschritt erfolgt die Selektion der für die Funktionen relevanten Attribute aus dem angereicherten MPP-Pfad in Abhängigkeit von der extrapolierten Fahrzeugposition. Gegebenenfalls erfolgt die Aufbereitung des Datensatzes in ein für die jeweilige Funktion geeignetes Format.

Gemäß einem Ausführungsbeispiel erfolgt die Übermittlung der Positionsstützstellen vom Backend an den Client in bestimmten Intervallen. Dies reduziert Ungenauigkeiten, etwa die Fehlerakkumulation durch eine lokale Fahrzeugodometrie.

Gemäß einem weiteren Ausführungsbeispiel erfolgt eine lokale Erkennung einer Abbiegung vom bisher genutzten MPP-Pfad auf einen anderen MPP-Pfad unter Verwendung der lokalen Fahrzeugsensorik 110, beispielsweise eines Gierratensensors. Dazu werden die MPP-Pfade mit entsprechenden Attributen wie etwa Abbiegewinkeln oder Kurvenkrümmungen an möglichen Abzweigungspunkten angereichert.

Eine spurgenaue Ortung wird beispielsweise durch die Verwendung von Fahrstreifensignalen der Fahrzeugsensorik 110 im zweiten, vierten und/oder siebten Verarbeitungsschritt ermöglicht. Die Anpassung des MPP-Pfades erfolgt dann abhängig vom genutzten Fahrstreifen im dritten und/oder siebten Verarbeitungsschritt.

Durch die direkte Verwendung der Daten auf dem Backend für die Ortung und die Anreicherung des MPP-Pfades um kartenbasierte Daten oder Attribute verfügt das System stets über die aktuellsten Daten.

Durch lokales Tracking der Fahrzeugposition auf Grundlage eines sehr kompakten eindimensionalen Datensatzes können Latenzen bei der backend basierten Ortung vermieden werden. Damit kann eine verhältnismäßig genaue Echtzeitortung realisiert werden.

Durch Position Tracking entlang des sehr kompakten eindimensionalen Datensatzes und durch entsprechendes Vorladen des angereicherten MPP-Pfades im Client können beispielsweise auch Mobilfunk-Verbindungsabbrüche überbrückt werden.

Im Fahrzeug 102 selbst kann günstigere Hardware verwendet werden, da rechenintensive und speicheraufwendige Operationen ins Backend ausgelagert sind.

Ferner kann durch die Verwendung eines sehr kompakten eindimensionalen zu übermittelnden Datensatzes und durch ein hochfrequentes lokales Tracking der Fahrzeugposition bei niederfrequenter Übermittlung von Positionsstützstellen seitens des Backend eine für die backendgestützte Echtzeitortung erforderliche Kommunikationsbandbreite deutlich reduziert werden.

Auch kann die backendseitige Ortung für Funktionen genutzt werden, die vollständig auf dem Backend arbeiten sollen.

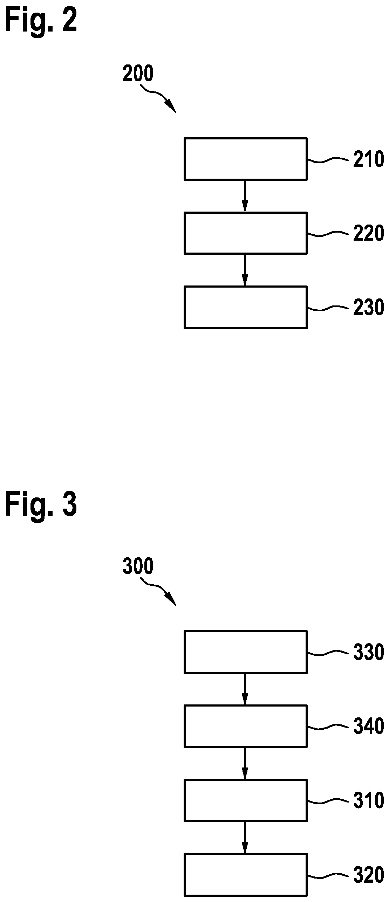

Fig. 2 zeigt ein Ablaufdiagramm eines Verfahrens 200 zum Bereitstellen einer Ortungsinformation mittels einer Ortungseinrichtung gemäß einem Ausführungsbeispiel, etwa der vorangehend anhand von Fig. 1 beschriebenen Ortungseinrichtung. Dabei wird in einem ersten Schritt 210 die von der Fahrzeugsensorik bereitgestellte Fahrzeugsensorinformation von der Schnittstelle zwischen der Ortungseinrichtung und dem Fahrzeug empfangen. In einem zweiten Schritt 220 wird das Fahrzeug unter Verwendung der Fahrzeugsensorinformation in der digitalen Karte verortet, um die Ortungsinformation zu erzeugen. Die Ortungsinformation umfasst dabei zumindest eine Stützstelle für eine fahrzeugseitige Positionsbestimmung des Fahrzeugs. Dem Fahrzeug wird die Ortungsinformation in einem dritten Schritt 230 durch Ausgeben, beispielsweise durch Senden, an die Schnittstelle bereitgestellt.

Fig. 3 zeigt ein Ablaufdiagramm eines Verfahrens 300 zum Orten eines Fahrzeugs mittels einer Vorrichtung gemäß einem Ausführungsbeispiel, etwa der vorangehend anhand von Fig. 1 beschrieben Vorrichtung. Dabei wird in einem Schritt 310 die von der Ortungseinrichtung bereitgestellte Ortungsinformation von der Schnittstelle empfangen. In einem weiteren Schritt 320 erfolgt die Bestimmung der Position des Fahrzeugs anhand der die Stützstelle oder mehrere Stützstellen umfassenden Ortungsinformation und eines von der Fahrzeugsensorik bereitgestellten Sensorsignals.

Gemäß einem Ausführungsbeispiel umfasst das Verfahren 300 einen Schritt 330 des Erfassens von Daten unter Verwendung der Fahrzeugsensorik und einen Schritt 340 des Aussendens der die Daten repräsentierenden Fahrzeugsensorinformation an die Schnittstelle zwischen der Ortungseinrichtung und dem Fahrzeug.

Beispielsweise werden die Schritte des Verfahrens 300 während einer Fahrt des Fahrzeugs fortlaufend wiederholt ausgeführt um direkt während der Fahrt stets auf aktuellen Fahrzeugsensorinformationen basierende aktuelle Ortungsinformationen zu erhalten, die beispielsweise direkt während der Fahrt zur Navigation des Fahrzeugs verwendet werden.

Gemäß einem Ausführungsbeispiel liegt zwischen dem Schritt 330 des Erfassens und dem Schritt 320 des Bestimmens der Position des Fahrzeugs unter Verwendung der im Schritt 330 erfassten Daten eine Zeitspanne von weniger als einer Minute.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200; 300) zum Orten eines Fahrzeugs (102) mittels einer Ortungsinformation (116) einer fahrzeugexternen Ortungseinrichtung (100), die ausgebildet ist, um gleichzeitig mit mehreren Fahrzeugen zu Ortungszwecken zu kommunizieren, wobei das Verfahren (200) folgende Schritte umfasst:
Empfangen (210) einer Fahrzeugsensorinformation (112) von einer Schnittstelle (104) zwischen der Ortungseinrichtung (100) und dem Fahrzeug (102), wobei die Fahrzeugsensorinformation (112) von einer Fahrzeugsensorik (110) des Fahrzeugs (102) bereitgestellte Daten repräsentiert;
Verorten (220) des Fahrzeugs (102) in einer digitalen Karte (114, 130) unter Verwendung der Fahrzeugsensorinformation (112), wobei zumindest ein voraussichtlicher Pfad des Fahrzeugs (102) und eine aktuelle Position des Fahrzeugs (102) ermittelt werden, wobei der voraussichtliche Pfad mit zumindest einer Stützstelle für eine fahrzeugseitige Ortung des Fahrzeugs (102) und zumindest einer für das Fahrzeug (102) relevanten Zusatzinformation verknüpft wird, um einen angereicherten Pfad als die Ortungsinformation (116) zu erzeugen, wobei die zumindest eine Stützstelle eine mittels der Ortungseinrichtung (100) ermittelte und mit dem voraussichtliche Pfad verknüpfte aktuelle Position oder voraussichtliche zukünftige Position des Fahrzeugs (102) repräsentiert, wobei die Stützsteile durch Projektion der aktuellen Position des Fahrzeugs (102) mit einem dazugehörigen Zeitstempel auf den voraussichtlichen Pfad erzeugt wird, und wobei die Zusatzinformation zum Erhöhen der Genauigkeit und Zuverlässigkeit der fahrzeugseitigen Ortung ein Kartenattribut der digitalen Karte repräsentiert;
Ausgeben (230) der Ortungsinformation (116) an die Schnittstelle (104), um die Ortungsinformation (116) bereitzustellen;
Empfangen (310) der Ortungsinformation (116) von der Schnittstelle (104); und
Bestimmen (320) einer Position des Fahrzeugs (102) durch Verarbeiten der Ortungsinformation (116) unter Verwendung eines von einer Fahrzeugsensorik (110) des Fahrzeugs (102) bereitgestellten Sensorsignals (122), um das Fahrzeug (102) zu orten, wobei im Schritt des Bestimmens (320) die Position unter Verwendung einer durch das Sensorsignal (122) repräsentierten aktuellen Geschwindigkeit des Fahrzeugs (102) und eines durch die Ortungsinformation (116) repräsentierten Zeitstempels der Stützstelle extrapoliert wird, wobei die Verfügbarkeit einer Karte im Fahrzeug (102) entfällt.

2. Verfahren (200; 300) gemäß Anspruch 1, bei dem im Schritt des Verortens (220) ein eindimensionaler Pfad als der voraussichtliche Pfad ermittelt wird.

3. Verfahren (200) gemäß Anspruch 1 oder 2, bei dem im Schritt des Verortens (220) der voraussichtliche Pfad mit einer zumindest eine Abzweigungsstelle des voraussichtlichen Pfades repräsentierenden Zusatzinformation verknüpft wird, wobei es sich bei der Abzweigungsstelle um einen Punkt des voraussichtlichen Pfads handelt, an dem das Fahrzeug (102) die Möglichkeit hat, abzubiegen, und wobei die mit der Abzweigungsstelle verknüpfte Zusatzinformation einen Abbiegewinkel oder eine Kurvenkrümmung an der Abzweigungsstelle repräsentiert.

4. Verfahren (200; 300) gemäß einem der vorangegangenen Ansprüche, bei dem die Fahrzeugsensorinformation (112) im Schritt des Empfangens (210) Daten über einen aktuelle von dem Fahrzeug (102) befahrenen Fahrstreifen repräsentiert.

5. Verfahren (200; 300) gemäß einem der vorangegangenen Ansprüche, bei dem die Schritte des Empfangens (210), Verortens (220) und Ausgebens (230) in definierten Intervallen wiederholt ausgeführt werden, insbesondere wobei zwischen dem Schritt des Empfangens (210) und dem Schritt des Ausgebens (230) eine Zeitspanne von weniger als einer Minute liegt.

6. Verfahren (200; 300) gemäß einem der vorangegangenen Ansprüche, mit einem Schritt des Erfassens (330) der Daten unter Verwendung der Fahrzeugsensorik (110) und einem Schritt des Aussendens (340) der die Daten repräsentierenden Fahrzeugsensorinformation (112) an die Schnittstelle (104) zwischen der Ortungseinrichtung (100) und dem Fahrzeug (102), wobei die Schritte des Erfassens (330), des Aussendens (340), des Empfangens (310) und des Bestimmens (320) während einer Fahrt des Fahrzeugs (102) mehrfach wiederholt ausgeführt werden.

7. Vorrichtung (100, 106) mit Einheiten (108, 118, 120, 124, 132, 140), die ausgebildet sind, um das Verfahren (300) gemäß einem der vorangegangenen Ansprüche auszuführen und/oder anzusteuern.

8. Computerprogramm, das ausgebildet ist, um das Verfahren (200; 300) gemäß einem der Ansprüche 1 bis 6auszuführen und/oder anzusteuern.

9. Maschinenlesbares Speichermedium, auf dem das Computerprogramm nach Anspruch 8 gespeichert ist.

## Claims

1. Method (200; 300) for localizing a vehicle (102) using localization information (116) from a localization device (100) outside the vehicle, said localization device being designed to communicate simultaneously with multiple vehicles for localization purposes, wherein the method (200) comprises the following steps:
receiving (210) vehicle sensor information (112) from an interface (104) between the localization device (100) and the vehicle (102), wherein the vehicle sensor information (112) represents data provided by a vehicle sensor system (110) of the vehicle (102);
localizing (220) the vehicle (102) in a digital map (114, 130) using the vehicle sensor information (112), wherein at least a provisional path of the vehicle (102) and a current position of the vehicle (102) are ascertained, wherein the provisional path is linked to at least one interpolation point for vehicle-based localization of the vehicle (102) and at least one piece of additional information relevant to the vehicle (102) in order to generate an enriched path as the localization information (116), wherein the at least one interpolation point represents a current position or provisional future position of the vehicle (102) that is ascertained by way of the localization device (100) and linked to the provisional path, wherein the interpolation point is generated by projecting the current position of the vehicle (102), with an associated timestamp, onto the provisional path, and wherein the additional information, in order to increase the accuracy and reliability of the vehicle-based localization, represents a map attribute of the digital map;
outputting (230) the localization information (116) to the interface (104) in order to provide the localization information (116);
receiving (310) the localization information (116) from the interface (104); and
determining (320) a position of the vehicle (102) by processing the localization information (116) using a sensor signal (122) provided by a vehicle sensor system (110) of the vehicle (102) in order to localize the vehicle (102), wherein, in the determining step (320), the position is extrapolated using a current speed of the vehicle (102) that is represented by the sensor signal (122) and a timestamp of the interpolation point that is represented by the localization information (116), wherein the availability of a map in the vehicle (102) is dispensed with.

2. Method (200; 300) according to Claim 1, wherein, in the localizing step (220), a one-dimensional path is ascertained as the provisional path.

3. Method (200) according to Claim 1 or 2, wherein, in the localizing step (220), the provisional path is linked to a piece of additional information representing at least one branch point of the provisional path, wherein the branch point is a point of the provisional path at which the vehicle (102) has the option of making a turn, and wherein the additional information linked to the branch point represents a turn angle or bend curvature at the branch point.

4. Method (200; 300) according to one of the preceding claims, wherein the vehicle sensor information (112) in the receiving step (210) represents data about a current lane in which the vehicle (102) is being driven.

5. Method (200; 300) according to one of the preceding claims, wherein the receiving step (210), localizing step (220) and outputting step (230) are carried out repeatedly at defined intervals, in particular wherein there is a period of less than one minute between the receiving step (210) and the outputting step (230).

6. Method (200; 300) according to one of the preceding claims, comprising a step (330) of acquiring the data using the vehicle sensor system (110) and a step (340) of sending the vehicle sensor information (112) representing the data to the interface (104) between the localization device (100) and the vehicle (102), wherein the acquiring step (330), sending step (340), receiving step (310) and determining step (320) are carried out repeatedly multiple times while the vehicle (102) is being driven.

7. Device (100, 106) comprising units (108, 118, 120, 124, 132, 140) that are designed to carry out and/or control the method (300) according to one of the preceding claims.

8. Computer program designed to carry out and/or control the method (200; 300) according to one of Claims 1 to 6.

9. Machine-readable storage medium on which the computer program according to Claim 8 is stored.

## Revendications

1. Procédé (200 ; 300) de localisation d'un véhicule (102) au moyen d'une information de localisation (116) d'un dispositif de localisation à l'extérieur du véhicule (100), qui est formé pour communiquer simultanément avec plusieurs véhicules à des fins de localisation, le procédé (200) comprenant des étapes suivantes :
réception (210) d'une information de capteur (112) de véhicule d'une interface (104) entre le dispositif de localisation (100) et le véhicule (102), l'information de capteur (112) de véhicule représentant des données fournies par un système de capteur (110) de véhicule du véhicule (102) ;
localisation (220) du véhicule (102) sur une carte numérique (114, 130) en utilisant l'information de capteur (112) de véhicule, au moins un trajet attendu du véhicule (102) et une position actuelle du véhicule (102) étant déterminés, le trajet attendu étant lié à au moins un point de support pour une localisation du véhicule (102) côté véhicule et à au moins une information supplémentaire importante pour le véhicule (102) pour générer un trajet enrichi en tant qu'information de localisation (116), l'au moins un point de support représentant une position actuelle ou une position future attendue du véhicule (102) déterminée au moyen du dispositif de localisation (100) et liée au trajet attendu, le point de support étant généré par projection
de la position actuelle du véhicule (102) avec un horodatage associé sur le trajet attendu, et l'information supplémentaire destinée à augmenter la précision et la fiabilité de la localisation côté véhicule représentant un attribut cartographique de la carte numérique ;
envoi (230) de l'information de localisation (116) à l'interface (104) pour fournir l'information de localisation (116) ;
réception (310) de l'information de localisation (116) de l'interface (104) ; et
définition (320) d'une position du véhicule (102) par traitement de l'information de localisation (116) en utilisant un signal de capteur (122) fourni par un système de capteur (110) de véhicule du véhicule (102) pour localiser le véhicule (102), la position étant extrapolée, dans l'étape de définition (320), en utilisant une vitesse actuelle du véhicule (102) représentée par le signal de capteur (122) et un horodatage du point de support représenté par l'information de localisation (116), la disponibilité d'une carte dans le véhicule (102) étant exclue.

2. Procédé (200 ; 300) selon la revendication 1, dans lequel un trajet unidimensionnel est déterminé comme étant le trajet attendu dans l'étape de la localisation (220).

3. Procédé (200) selon la revendication 1 ou 2, dans lequel, dans l'étape de la localisation (220), le trajet attendu est lié à une information supplémentaire représentant au moins un point d'embranchement du trajet attendu, le point d'embranchement étant un point du trajet attendu, sur lequel le véhicule (102) a la possibilité de bifurquer et l'information supplémentaire liée au point d'embranchement représentant un angle de bifurcation ou une courbure de virage sur le point d'embranchement.

4. Procédé (200 ; 300) selon l'une des revendications précédentes, dans lequel l'information de capteur (112) de véhicule représente des données concernant une voie de circulation actuelle parcourue par le véhicule (102) dans l'étape de la réception (210).

5. Procédé (200 ; 300) selon l'une des revendications précédentes, dans lequel les étapes de la réception (210), de la localisation (220) et de l'envoi (230) sont exécutées de manière répétée à des intervalles définis, en particulier une période de temps inférieure à une minute se situant entre l'étape de la réception (210) et l'étape de l'envoi (230).

6. Procédé (200 ; 300) selon l'une des revendications précédentes, avec une étape de détection (330) des données en utilisant le système de capteur (110) de véhicule et une étape de transmission (340) de l'information de capteur (112) de véhicule représentant les données à l'interface (104) entre le dispositif de localisation (100) et le véhicule (102), les étapes de la détection (330), de la transmission (340), de la réception (310) et de la définition (320) étant exécutées de manière répétée à plusieurs reprises pendant un trajet du véhicule (102).

7. Dispositif (100, 106) avec des unités (108, 118, 120, 124, 132, 140) qui sont formées pour exécuter et/ou piloter le procédé (300) selon l'une des revendications précédentes.

8. Programme informatique, qui est formé pour exécuter et/ou piloter le procédé (200 ; 300) selon l'une des revendications 1 à 6.

9. Support de stockage lisible par machine, sur lequel est stocké le programme informatique selon la revendication 8.
